# EUROPÄISCHE PATENTSCHRIFT

(11) **EP 3 961 329 B1**
(45) Veröffentlichungstag und Bekanntmachung des Hinweises auf die Patenterteilung: **11.09.2024**
(21) Anmeldenummer: 21187709.7
(22) Anmeldetag: 26.07.2021
(51) Int. Cl.: G05B 19/418

(54) **STEUEREINHEIT SOWIE VERFAHREN ZUM STEUERN VON TRANSPORTEN EINER VIELZAHL AN WERKSTÜCKEN IN EINEM MODULAREN MONTAGESYSTEM MITTELS EINES GENETISCHEN ALGORITHMUS; MONTAGESYSTEM**
CONTROL UNIT AND METHOD FOR CONTROLLING TRANSPORT OF A PLURALITY OF WORKPIECES IN A MODULAR ASSEMBLY SYSTEM USING A GENETIC ALGORITHM; MOUNTING SYSTEM
UNITÉ DE COMMANDE, AINSI QUE PROCÉDÉ DE COMMANDE DES TRANSPORTS D'UNE PLURALITÉ DE PIÈCES DANS UN SYSTÈME MODULAIRE DE MONTAGE AU MOYEN D'UN ALGORITHME GÉNÉTIQUE, SYSTÈME DE MONTAGE

(30) Priorität: 25.08.2020 DE 102020122194
(43) Veröffentlichungstag der Anmeldung: 02.03.2022
(73) Patentinhaber: Audi AG, 85045 Ingolstadt (DE)
(72) Erfinder: Schmidt, Jörg, 85053 Ingolstadt (DE); Mayer, Sebastian, 80809 München (DE); Endisch, Christian, 85290 Geisenfeld (DE)

(56) Entgegenhaltungen:
- CN-A- 106 611 232
- CN-A- 108 805 403
- CN-A- 109 894 929
- MUHAMMADUMAIR AKHTAR ET AL: "Role of batch size in scheduling optimization of flexible manufacturing system using genetic algorithm", JOURNAL OF INDUSTRIAL ENGINEERING INTERNATIONAL, BIOMED CENTRAL LTD, LONDON, UK, vol. 15, no. 1, 16 June 2018 (2018-06-16), pages 135 - 146, XP021269930, ISSN: 1735-5702, DOI: 10.1007/S40092-018-0278-2
- LEE D Y ET AL: "INTEGRATED SCHEDULING OF FLEXIBLE MANUFACTURING SYSTEMS EMPLOYING AUTOMATED GUIDED VEHICLES", IEEE TRANSACTIONS ON INDUSTRIAL ELECTRONICS, IEEE SERVICE CENTER, PISCATAWAY, NJ, USA, vol. 41, no. 6, 1 December 1994 (1994-12-01), pages 602 - 610, XP000506428, ISSN: 0278-0046, DOI: 10.1109/41.334577

## Beschreibung

Die Erfindung betrifft ein Verfahren zum Steuern von Transporten einer Vielzahl an Werkstücken in einem modularen Montagesystem mit mehreren Montageorten. Ein zweiter Aspekt der vorliegenden Erfindung betrifft eine Steuereinheit zum Steuern von Transporten einer Vielzahl an Werkstücken in einem modularen Montagesystem. Ein dritter Aspekt der vorliegenden Erfindung betrifft ein modulares Montagesystem mit einer solchen Steuereinheit.

In einem modularen Montagesystem werden die Werkstücke von einem Montageort zum nächsten Montageort über ein fahrerloses Transportsystem gefördert. Damit lassen sich unterschiedliche Montagereihenfolgen für unterschiedliche Produkte gut abbilden. Der Transport der Werkstücke erfolgt häufig auf Werkstückträgern, welche beispielsweise durch eine Palette oder dergleichen bereitgestellt sein können.

Der Transport erfolgt in der Regel durch ein fahrerloses Transportsystem mit einer Vielzahl an fahrerlosen Transportfahrzeugen. Dabei ist es wichtig, dass die Bauteile immer rechtzeitig von einem Montageort zum nächsten gebracht werden. Durch die unterschiedlichen Montagereihenfolgen erfolgt der Transport aber nicht in derselben Reihenfolge wie beim Auflegen am Montagestart sondern desorganisiert. Desorganisation zeigt sich regelmäßig auch darin, dass mehrere Werkstückträger dieselbe Station gleichzeitig zum Ziel haben. Hierfür wird eine Regelung benötigt.

Gemäß dem Stand der Technik wird das Montagesystem über relativ einfache Pull-Prinzipien gesteuert. Ein Werkstückträger wird von einem Montageort zum nächsten Montageort gebracht, wenn der nächste Montageort Platz für die Aufnahme des Werkstückträgers hat. Eine übergreifende Koordination zwischen mehreren Werkstückträgern findet nicht statt. Damit wird nicht das Optimum der Steuerung erreicht und die Desorganisation wird nicht global gelöst.

Um diese Desorganisation einzudämmen und bezüglich Ausbringung des Gesamtsystems zu optimieren, kann mit einem Schedule (Fahrplan) gearbeitet werden, der Fahrzeiten, Bearbeitungszeiten und die Belegung der Montagestationen berücksichtigt. Solche Schedules können über mathematische Optimierungsverfahren oder auch genetische Algorithmen so optimiert werden, dass der Gesamtfahrplan in der zeitlichen Ausdehnung möglichst kurz ist, also in einer Zeiteinheit möglichst viele Produkte erzeugt werden. Dazu muss zeitlich immer über einen gewissen Zeitraum nach vorn geschaut werden.

In diesem Kontext offenbart die Veröffentlichung "Selbstgesteuerte Fahrerlose Transportsysteme" von Christoph Schwarz et al., Logistics Journal, ISNN 1068-5923, 2013 eine komplett dezentrale Steuerung für ein fahrerloses Transportfahrzeug, mit deren Hilfe fahrerlose Transportfahrzeuge auf der Grundlage von sich dynamisch ändernden Informationen ihre Transportplanung durchführen. In diesem System kooperieren Agenten, welche die Koordination der fahrerlosen Transportfahrzeuge untereinander sowie eine proaktive dynamische Planung ermöglichen. Die Berücksichtigung dynamischer Verkehrsdaten und einer Lastsituation sowie die dezentrale Entscheidung und Datenhaltung seien vorteilhafte Neuerungen.

Die Druckschrift "Integration der Fahrplanoptimierung und Umlaufplanung" von Sven J. Jäger, Bachelorarbeit an der Georg-August-Universität Göttingen, 30. August 2013 betrifft Probleme, einen Fahrplan und einen Umlaufplan zu erstellen, wobei eine bikriterielle IP-Formulierung für deren gemeinsame Lösung aufgestellt wird. Es ist eine Heuristik offenbart, welche Fahrpläne und Umlaufpläne berechnet, die mit weniger Fahrzeugen beziehungsweise Kosten auskommen, dafür aber höhere Reisezeiten von Kunden eines zugrunde liegenden öffentlichen Personenverkehrs in Kauf nehmen.

Das Dokument CN109894929A zeigt ein modulares, rekonfigurierbares, flexibles Produktionsverfahren und -system.

Das Dokument CN108805403A offenbart ein Verfahren zur Planung einer Einzelteilfertigung, das auf einem verbesserten genetischen Algorithmus basiert, um ein Problem der Planung einer Einzelteilfertigung zu lösen.

Es ist Aufgabe der vorliegenden Erfindung, eine flexiblere und effektivere Planung von Transporten einer Vielzahl an Werkstücken in einem modularen Montagesystem zu ermöglichen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Ein erster Aspekt der vorliegenden Erfindung betrifft das Verfahren zum Steuern von Transporten einer Vielzahl an Werkstücken in einem modularen Montagesystem mit mehreren Montageorten. Zur Lösung der genannten Aufgabe weist das Verfahren die folgenden Schritte auf:
- Bestimmen jeweiliger Produktionsdaten für die Werkstücke, wobei die Produktionsdaten die Angabe einer Position und eines Ziel-Montageortes für das jeweilige Werkstück beinhalten,
- Bestimmen von Transportdaten basierend zumindest auf den Produktionsdaten, wobei durch die Transportdaten jedem Werkstück der Vielzahl ein jeweils durchzuführender Transport zugeordnet wird,
- Bestimmen eines ersten Planungsdatensatzes basierend auf den Transportdaten, wobei durch Verteilen einer Vielzahl an Transporteinheiten auf die durchzuführenden Transporte nach einer vorbestimmten Vorschrift eine Zuordnung zwischen Transporteinheiten und durchzuführenden Transporten erzeugt wird,
- Erzeugen einer Vielzahl zweiter Planungsdatensätze aus dem ersten Planungsdatensatz durch jeweils unterschiedliche Rekombination der Zuordnung zwischen den Transporteinheiten und den durchzuführenden Transporten,
- Auswählen eines ausgewählten der zweiten Planungsdatensätze nach einem vorbestimmten Bewertungskriterium, und
- Steuern des Transports der Vielzahl an Werkstücken durch die Transporteinheiten entsprechend dem ausgewählten zweiten Planungsdatensatz.

Bei dem modularen Montagesystem kann es sich um einen Bereich, etwa einer Fabrik, handeln, in welchem zumindest ein Montageort, vorzugsweise jedoch mehrere Montageorte, angeordnet sind. Der Montageort beziehungsweise die Montageorte können auch als Produktionsinsel bezeichnet werden. Insbesondere ist vorgesehen, dass die Montageorte beziehungsweise der Montageort einen oder mehrere Produktionsschritte bei der Fertigung eines Produkts ermöglicht beziehungsweise zur Durchführung des einen oder der mehreren Produktionsschritte eingerichtet ist. Beispielsweise kann vorgesehen sein, dass ein Werkstück, aus welchem das Produkt gefertigt wird, nacheinander unterschiedliche Montageorte durchläuft, wobei an den unterschiedlichen Montageorten sequenziell unterschiedliche Produktionsschritte zur Fertigung des Produkts durchgeführt werden. Mit anderen Worten können in diesem Beispiel die Montageorte dazu ausgebildet sein, das Werkstück über mehrere Zwischenschritte beziehungsweise Zwischenprodukte zu fertigen beziehungsweise zu veredeln, insbesondere bis am Ende das fertige Produkt entsteht. Es kann auch vorgesehen sein, dass mehrere Montageorte dazu eingerichtet sind, denselben oder dieselben Produktionsschritte durchzuführen. Dies kann beispielsweise sinnvoll sein, wenn einzelne Produktionsschritte besonders zeitaufwändig sind im Vergleich zu anderen Produktionsschritten. Auf diese Weise kann eine Verzögerung der Produktion insgesamt vermieden werden, indem diese besonders zeitaufwändigen Produktionsschritte parallel durch mehrere Montageorte durchgeführt werden. Insbesondere weist jeder Montageort eine Maschine oder Einrichtung auf, welche zur Durchführung eines dem jeweiligen Montageort zugeordneten Produktionsschritts ausgebildet ist.

Dadurch, dass die Werkstücke im Rahmen der Produktion nacheinander mehrere Montageorte durchlaufen, ergibt sich die Notwendigkeit, die Werkstücke zwischen den Montageorten zu transportieren. Dies erfolgt über die Vielzahl an Transporteinheiten, welche insbesondere als fahrerlose Transportfahrzeuge ausgeführt sind. Um den Transport möglichst effizient zu gestalten, ist das vorliegende Verfahren vorgesehen.

In dem ersten Schritt werden die jeweiligen Produktionsdaten für die Vielzahl der Werkstücke bestimmt. Mit anderen Worten werden jeweilige Produktionsdaten für jedes der Werkstücke bestimmt. Die Produktionsdaten enthalten eine Angabe einer Position sowie eine Angabe eines Ziel-Montageortes für das jeweilige Werkstück. Die jeweilige Position kann dabei angeben, an welchem der mehreren Montageorte sich das jeweilige Werkstück momentan befindet. In weiterer Ausgestaltung kann die jeweilige Position zusätzlich angeben, wo in oder an dem Montageort sich das jeweilige Werkstück momentan befindet. Beispielsweise kann die Angabe der jeweiligen Position zusätzlich eine Angabe enthalten, ob sich das jeweilige Werkstück auf einem fahrerlosen Transportfahrzeug im Zulauf zu dem Montageort, in einer Einlaufposition beziehungsweise Warenannahme des Montageortes, in Bearbeitung beziehungsweise einer Bearbeitungsposition des Montageortes, in einem Auslauf beziehungsweise in einem Ausgangslager des Montageortes oder auf einem fahrerlosen Transportfahrzeug, das im Begriff ist, den Montageort mit dem Werkstück zu verlassen, befindet. Je nach Ausführung des modularen Montagesystems beziehungsweise des jeweiligen Montageortes kann auch vorgesehen sein, dass nur einzelne der beispielhaft aufgezählten Positionen an dem Montageort vorgesehen sind.

Das Bestimmen der jeweiligen Position des Werkstücks kann beispielsweise anhand von Situationsdaten einer Vielzahl an Sensoren des modularen Montagesystems beziehungsweise der Montageorte bestimmt werden. Beispielsweise sind die jeweiligen Sensoren der Vielzahl dazu ausgebildet, die Anwesenheit eines der Werkstücke zu erfassen und als Teil der Sensordaten auszugeben. Beispielsweise weist ein jeweiliges Werkstück hierzu ein Identifikationsmerkmal auf. Ein jeweiliger Sensor der Vielzahl kann dazu ausgebildet sein, dieses Identifikationsmerkmal zu erfassen und ein entsprechendes Sensorsignal als Teil der Sensordaten auszugeben. Beispielsweise kann es sich bei dem Identifikationsmerkmal um einen Barcode oder einen passiven oder aktiven Funksignalgeber (RFID-Chip) handeln. Der jeweilige Sensor kann dementsprechend als Barcode-Scanner oder korrespondierendes Lesegerät (RFID-Sensor) ausgeführt sein. Beispielsweise weist jeder der mehreren Montageorte einen jeweiligen Sensor der Vielzahl auf. In weiterer Ausgestaltung können an jedem der Montageorte mehrere Sensoren vorgesehen sein. Beispielsweise ist ein jeweiliger Sensor am Einlauf beziehungsweise Wareneingang, in der Bearbeitungsposition und/oder im Auslauf beziehungsweise Ausgangslager des Montageortes vorgesehen. Es kann in weiterer Ausgestaltung auch oder alternativ vorgesehen sein, dass an jedem der fahrerlosen Transportfahrzeuge ein jeweiliger Sensor angeordnet ist. Beispielsweise können die jeweiligen Sensorsignale beziehungsweise die Sensordaten mittels einer Datenverbindung an eine Steuereinheit zum Steuern des Transports übermittelt werden. Diese Datenverbindung kann beispielsweise kabelgebunden oder kabellos (beispielsweise WiFi, Bluetooth oder Mobilfunk) bereitgestellt sein. Die Steuereinheit kann eine Empfangsschnittstelle für das Empfangen der jeweiligen Sensorsignale beziehungsweise der Sensordaten aufweisen.

Alternativ kann vorgesehen sein, dass das jeweilige eindeutige Identifikationsmerkmal nicht an dem Werkstück selbst, sondern an einem Werkstückträger für den Transport des jeweiligen Werkstücks angeordnet ist. Beispielsweise kann vorgesehen sein, dass das Werkstück über mehrere Produktionsschritte auf einem jeweiligen Werkstückträger angeordnet ist. Der Werkstückträger kann als Träger für den Transport des jeweiligen Werkstücks dienen. Dadurch, dass das eindeutige Identifikationsmerkmal an dem Werkstückträger angeordnet ist, kann ein Schritt entfallen, in welchem das Identifikationsmerkmal ansonsten an dem Werkstück angebracht werden müsste. Zudem kann das jeweilige eindeutige Identifikationsmerkmal besonders fest beziehungsweise irreversibel an dem Werkstückträger angebracht sein, da eine Entfernung desselben nach Fertigstellung des Werkstücks nicht notwendig ist.

Der Ziel-Montageort kann sich aus einem Produktionsablauf beziehungsweise einer vorbestimmten Folge der Produktionsschritte für das Werkstück ergeben. Mit anderen Worten kann das Werkstück die mehreren Montageorte in einer vorbestimmten Reihenfolge durchlaufen, um die Produktionsschritte in der richtigen Reihenfolge erbringen zu können. Der Ziel-Montageort kann somit aus der Abfolge der Produktionsschritte abgeleitet werden. Die Abfolge der Produktionsschritte kann hierzu aus einer Datenbank abgerufen werden. Beispielsweise weist die Steuereinheit zum Steuern des Transports hierzu eine Schnittstelle zu der Datenbank auf. Selbstverständlich können auch mehrere Montageorte als Ziel-Montageort in Frage kommen. Dies ist insbesondere dann der Fall, wenn der jeweilige als nächstes durchzuführende Produktionsschritt an mehreren Montageorten beziehungsweise durch mehrere Montageorte erbracht werden kann. Die Produktionsdaten können daher auch mehrere Ziel-Montageorte beinhalten. Beispielsweise können die Produktionsdaten alle Montageorte als Ziel-Montageort beinhalten, welche für die Durchführung des als Nächstes durchzuführenden Produktionsschritts geeignet sind. Analog können die Produktionsdaten mehrere Ziel-Montageorte enthalten, wenn die Reihenfolge der Produktionsschritte variabel ist.

Basierend auf den Produktionsdaten werden die Transportdaten bestimmt. Die Transportdaten ordnen jedem Werkstück einen jeweils durchzuführenden Transport zu. Der jeweils durchzuführende Transport kann beispielsweise charakterisiert sein durch einen Startpunkt, welcher insbesondere der jeweiligen Position des Werkstücks entspricht, und den Ziel-Montageort. Optional können die Transportdaten jedem durchzuführenden Transport zusätzlich einen Zeitstempel zuordnen. Dieser Zeitstempel gibt an, zu welchem Zeitpunkt der jeweilige Transport durchzuführen ist. Auf diese Weise kann berücksichtigt werden, ob das jeweilige Werkstück bereits zum jeweiligen Betrachtungszeitpunkt zum Transport bereitsteht (dies ist beispielsweise der Fall, wenn sich das Werkstück bereits im Auslauf beziehungsweise Ausgangslager des jeweiligen Montageortes befindet) oder erst zu einem späteren Zeitpunkt (dies ist beispielsweise dann der Fall, wenn sich das jeweilige Werkstück noch in der Bearbeitungsposition des jeweiligen Montageortes befindet).

Gemäß einer Weiterbildung ist daher vorgesehen, dass als Teil der Produktionsdaten zusätzlich eine Restverarbeitungszeit für das jeweilige Werkstück bestimmt wird. Der jeweils durchzuführende Transport kann dann zusätzlich in Abhängigkeit von der Restverarbeitungszeit bestimmt werden. Insbesondere kann der genannte Zeitstempel für den durchzuführenden Transport in Abhängigkeit von der Restverarbeitungszeit bestimmt werden. Auf diese Weise können abhängig von der Restverarbeitungszeit auch zukünftig durchzuführende Transporte als Teil der Transportdaten berücksichtigt werden.

In weiterer Ausgestaltung können die Transportdaten zusätzlich eine Transportdauer für jeden durchzuführenden Transport beinhalten. Beispielsweise kann für jeden durchzuführenden Transport ein vorbestimmter Wert für die Dauer angenommen werden. In einer verbesserten Ausführungsform kann die Transportdauer abhängig von Startposition beziehungsweise aktueller Position des jeweiligen Werkstücks und Ziel-Montageort bestimmt werden. Insbesondere wird dabei die Entfernung zwischen Startposition beziehungsweise aktueller Position des Werkstücks und Ziel-Montageort zugrunde gelegt. Dabei kann entweder eine feste Geschwindigkeit angenommen werden oder eine Simulation der Transportdauer erfolgen.

Basierend auf den Transportdaten wird der erste Planungsdatensatz bestimmt. Dabei wird die Vielzahl an Transporteinheiten beziehungsweise fahrerlosen Transportfahrzeugen auf die durchzuführenden Transporte verteilt. Mit anderen Worten wird eine Zuordnung zwischen den Transporteinheiten, insbesondere den fahrerlosen Transportfahrzeugen und den durchzuführenden Transporten erzeugt. Dies erfolgt durch die vorbestimmte Vorschrift. Gemäß dieser werden die Transporteinheiten den durchzuführenden Transporten zugeordnet. Die vorbestimmte Vorschrift kann beispielsweise vorgeben, dass jeder der durchzuführenden Transporte durch die nächstliegende Transporteinheit durchgeführt wird. Dabei erfolgt diese Zuordnung entlang einer Zeitachse. Auf diese Weise kann berücksichtigt werden, dass durch jede der Transporteinheiten gleichzeitig beispielsweise nur ein Transport möglich ist. Übersteigt die Anzahl der durchzuführenden Transporte daher die Anzahl der Transporteinheiten, so kann entsprechend dem ersten Planungsdatensatz eine Transporteinheit erst dann einem weiteren durchzuführenden Transport zugeordnet werden, sobald der vorherige durchzuführende Transport abgeschlossen ist. In diesem Kontext kann insbesondere die Transportdauer, welche optional Teil der Transportdaten ist, berücksichtigt werden. Zusätzlich können erst später durchzuführende Transporte anhand der Restverarbeitungszeit entlang des zeitlichen Ablaufs berücksichtigt werden. Erfindungsgemäß ist vorgesehen, dass die vorbestimmte Vorschrift besonders einfach oder unkompliziert auszuführen ist. Denn eine optimale Zuordnung der Transporteinheiten auf die durchzuführenden Transporte ist gemäß des ersten Planungsdatensatzes überhaupt nicht nötig, da die Zuordnung später durch die Vielzahl zweiter Planungssätze verbessert wird.

Die Vielzahl zweiter Planungssätze wird nämlich aus dem ersten Planungsdatensatz erzeugt. Dabei wird in jedem der zweiten Planungssätze eine jeweils unterschiedliche Rekombination der Zuordnung zwischen den Transporteinheiten und den durchzuführenden Transporten durchgeführt. Somit zeichnet sich jeder der zweiten Planungsdatensätze durch eine jeweils unterschiedliche Zuordnung zwischen Transporteinheiten und durchzuführenden Transporten aus. Mit anderen Worten wird eine Vielzahl zweiter Planungssätze erzeugt, wobei jeder der zweiten Planungssätze eine untereinander abweichende Zuordnung zwischen Transporteinheiten und durchzuführenden Transporten beinhaltet.

Der ausgewählte der zweiten Planungsdatensätze wird anschließend aus der Vielzahl zweiter Planungsdatensätze gemäß dem vorbestimmten Bewertungskriterium ausgewählt. Mit anderen Worten wird gemäß dem vorbestimmten Bewertungskriterium bestimmt, welcher der zweiten Planungsdatensätze der beste ist. Das Steuern des Transports erfolgt dann entsprechend dem ausgewählten Planungsdatensatz.

Das Erzeugen der Vielzahl zweiter Planungsdatensätze aus dem ersten Planungsdatensatz kann auch als genetischer Algorithmus beziehungsweise evolutionärer Algorithmus bezeichnet werden. Durch Rekombination und/oder Selektion wird dabei die Zuordnung zwischen Transporteinheiten und durchzuführenden Transporten optimiert. Auf diese Weise ist es hinreichend, wenn die vorbestimmte Vorschrift zum erstmaligen Herstellen der Zuordnung zwischen Transporteinheiten und durchzuführenden Transporten als Teil des ersten Planungsdatensatzes nicht optimal ist. Es erfolgt später eine Optimierung mittels Variation und Selektion. Besonders vorteilhaft ist es dabei, wenn dieses Selektieren und Variieren über mehrere Generationen zweiter Planungsdatensätze erfolgt. Dies wird im Folgenden noch genauer ausgeführt.

Gemäß einer Weiterbildung ist vorgesehen, dass das Erzeugen der Vielzahl zweiter Planungsdatensätze in mehreren Iterationsschritten erfolgt, wobei innerhalb jedes der mehreren Iterationsschritte jeweils unterschiedliche Rekombinationen der Zuordnung zwischen den Transporteinheiten und den durchzuführenden Transporten erfolgen. Durch dieses Erzeugen von zweiten Planungsdatensätzen in mehreren Iterationsschritten können die oben genannten mehreren Generationen zweiter Planungsdatensätze realisiert werden. Dabei werden in jeder Generation beziehungsweise in jedem Iterationsschritt vorzugsweise jeweils eine Vielzahl zweiter Planungsdatensätze einer jeweiligen Generation erzeugt. Beispielsweise wird in einem ersten Iterationsschritt eine Vielzahl zweiter Planungsdatensätze erster Generation und in einem zweiten Iterationsschritt eine Vielzahl zweiter Planungsdatensätze zweiter Generation erzeugt. Dabei kann beispielsweise eine Vielzahl an aufeinanderfolgenden Iterationsschritten durchgeführt werden, wobei als Ergebnis jedes Iterationsschritts eine Vielzahl zweiter Planungsdatensätze n-ter Generation erzeugt werden kann. Als Grundlage für jeden der Iterationsschritte mit Ausnahme des ersten Iterationsschritts können dabei alle oder ausgewählte zweite Planungsdatensätze der vorherigen Generation herangezogen werden. Die ausgewählten Planungsdatensätze der vorherigen Generation können dabei gemäß dem vorbestimmten Bewertungskriterium ausgewählt werden. Beispielsweise wird eine vorbestimmte Anzahl an zweiten Planungsdatensätzen der vorherigen Generation ausgewählt. Beispielsweise kann die vorbestimmte Anzahl zwei, drei oder vier betragen. Die zweiten Planungsdatensätze erster Generation werden basierend auf dem ersten Planungsdatensatz erzeugt. In jedem der mehreren Iterationsschritte erfolgt dabei eine jeweils unterschiedliche Rekombination der Zuordnung zwischen den Transporteinheiten und den durchzuführenden Transporten. Auf diese Weise können auf besonders Ressourcenschonende Weise die Zuordnung und damit der Transport optimiert werden.

Das Auswählen des ausgewählten zweiten Planungsdatensatzes für das Steuern des Transports gemäß dem vorbestimmten Bewertungskriterium kann anhand aller zweiten Planungsdatensätze oder zum Beispiel nur anhand der zweiten Planungsdatensätze der letzten (n-ten) Generation erfolgen. Mit anderen Worten kann der ausgewählte zweite Planungsdatensatz zum Steuern des Transports aus allen zweiten Planungsdatensätzen oder nur aus den zweiten Planungsdatensätzen, beispielsweise der letzten (n-ten) Generation, ausgewählt werden.

Insbesondere ist vorgesehen, dass in einem ersten Iterationsschritt eine Vielzahl zweiter Planungsdatensätze erster Generation aus dem ersten Planungsdatensatz erzeugt werden und in einem zweiten Iterationsschritt eine Vielzahl zweiter Planungsdatensätze zweiter Generation aus den zweiten Planungsdatensätzen erster Generation, insbesondere der vorbestimmten Anzahl ausgewählter zweiter Planungsdatensätze erster Generation, erzeugt werden. Beispielsweise können aus jedem ausgewählten zweiten Planungsdatensatz erster Generation jeweils gleich viele zweite Planungsdatensätze zweiter Generation, beispielsweise 20, 50 oder 100, erzeugt werden.

Wie bereits angedeutet, können einige beziehungsweise ein Teil der zweiten Planungsdatensätze erster Generation als Basis für das Erzeugen der zweiten Planungsdatensätze zweiter Generation ausgewählt werden. Dabei wird insbesondere weniger als die Hälfte, weniger als ein Viertel oder weniger als ein Zehntel der zweiten Planungsdatensätze erster Generation ausgewählt. Somit kann vorgesehen sein, dass nach dem vorbestimmten Bewertungskriterium eine vorbestimmte Anzahl an zweiten Planungsdatensätzen erster Generation aus der Vielzahl zweiter Planungsdatensätze erster Generation ausgewählt werden, wobei nur die ausgewählten zweiten Planungsdatensätze erster Generation als Basis für die zweiten Planungsdatensätze zweiter Generation herangezogen werden. Das in diesem Kontext genannte vorbestimmte Bewertungskriterium kann dem vorbestimmten Bewertungskriterium zum Auswählen des ausgewählten zweiten Planungsdatensatzes zum Steuern des Transports entsprechen oder sich von diesem unterscheiden.

Gemäß einer Weiterbildung ist vorgesehen, dass die Transportdaten nur durchzuführende Transporte betreffen, die innerhalb eines vorausliegenden Zeitfensters vorbestimmter zeitlicher Dauer, beispielsweise höchstens 60 Minuten, höchstens 30 Minuten oder höchstens 10 Minuten, liegen. Das vorausliegende Zeitfenster vorbestimmter zeitlicher Dauer ist dabei insbesondere kürzer als eine Schichtdauer, mit welcher das modulare Montagesystem betrieben wird. Auf diese Weise ergibt sich, dass auch die ersten und zweiten Planungsdatensätze sowie der ausgewählte zweite Planungsdatensatz eine Zuordnung nur für durchzuführende Transporte beinhaltet, die innerhalb des vorausliegenden Zeitfensters vorbestimmter Dauer liegen. Auf diese Weise kann die Komplexität reduziert werden, da die Planung nur für das vorausliegende Zeitfenster vorbestimmter Dauer im Voraus bestimmt beziehungsweise durchgeführt wird.

Gemäß einer Weiterbildung ist vorgesehen, dass wiederholt, insbesondere regelmäßig oder periodisch, für jeweils aufeinanderfolgende vorausliegende Zeitfenster ein jeweiliger ausgewählter Planungsdatensatz bestimmt wird. Mit anderen Worten werden die zuvor genannten Verfahrensschritte wiederholt, insbesondere regelmäßig oder periodisch, durchgeführt, um jeweils für die aufeinanderfolgenden vorausliegenden Zeitfenster einen jeweiligen ausgewählten zweiten Planungsdatensatz zum Steuern der Transporte zu bestimmen. Dabei ist insbesondere vorgesehen, dass sich die vorausliegenden Zeitfenster überschneiden. Auf diese Weise kann die Planung beziehungsweise Steuerung der Transporte wiederholt, insbesondere regelmäßig oder periodisch, an eine aktuelle Situation angepasst werden. Auf diese Weise bleibt die Planung stets flexibel, und auch im Falle unerwarteter Änderungen kann eine fortlaufende Optimierung gewährleistet werden.

Gemäß einer Weiterbildung ist vorgesehen, dass eine Periodendauer, mit welcher das wiederholte Bestimmen von Planungsdatensätzen erfolgt, höchstens die Hälfte oder höchstens ein Viertel oder höchstens ein Zehntel der vorbestimmten zeitlichen Dauer des jeweiligen vorausliegenden Zeitfensters beträgt. Mit anderen Worten wird ein neuer ausgewählter zweiter Planungsdatensatz bereits erzeugt, bevor das aktuelle Zeitfenster abgelaufen ist, nämlich insbesondere wenn das aktuelle Zeitfenster höchstens zur Hälfte, höchstens zu einem Viertel oder höchstens zu einem Zehntel abgelaufen ist. Auf diese Weise können die Flexibilität und die Optimierung im Falle unvorhergesehener Ereignisse weiter verbessert werden.

Ein zweiter Aspekt der vorliegenden Erfindung betrifft eine Steuereinheit zum Steuern von Transporten mit einer Vielzahl an Werkstücken in einem modularen Montagesystem mit mehreren Montageorten. Die Steuereinheit weist auf:
- Eine Produktionsdatenbestimmungseinheit, ausgebildet zum Bestimmen jeweiliger Produktionsdaten für die Werkstücke der Vielzahl, wobei die Produktionsdaten eine Angabe einer Position und eines Ziel-Montageortes für das jeweilige Werkstück beinhalten,
- eine Transportdatenbestimmungseinheit, ausgebildet zum Bestimmen von Transportdaten basierend zumindest auf den Produktionsdaten, wobei durch die Transportdaten jedem Werkstück der Vielzahl ein jeweils durchzuführender Transport zugeordnet ist, und
- eine Planungsdatenbestimmungseinheit zum Bestimmen eines ersten Planungsdatensatzes basierend auf den Transportdaten, wobei die Planungsdatenbestimmungseinheit dazu ausgebildet ist, durch Verteilen einer Vielzahl an Transporteinheiten auf die durchzuführenden Transporte nach einer vorbestimmten Vorschrift eine Zuordnung zwischen Transporteinheiten und durchzuführenden Transporten zu erzeugen, wobei
- die Planungsdatenbestimmungseinheit dazu ausgebildet ist, eine Vielzahl zweiter Planungsdatensätze aus dem ersten Planungsdatensatz durch jeweils unterschiedliche Rekombination der Zuordnung zwischen den Transporteinheiten und den durchzuführenden Transporten zu erzeugen, und wobei
- die Planungsdatenbestimmungseinheit dazu ausgebildet ist, einen ausgewählten der zweiten Planungsdatensätze nach einem vorbestimmten Bewertungskriterium, auszuwählen, und wobei
- die Steuereinheit dazu ausgebildet ist, den Transport der Vielzahl an Werkstücken durch die Transporteinheiten entsprechend dem ausgewählten zweiten Planungsdatensatz zu steuern.

Insbesondere ist die Steuereinheit dazu ausgebildet, das erfindungsgemäße Verfahren durchzuführen beziehungsweise zu implementieren. Beispielsweise kann die Steuereinheit optional eine Ausgabeschnittstelle aufweisen, um den ausgewählten zweiten Planungsdatensatz an die Transporteinheiten auszugeben beziehungsweise zu übermitteln. Alternativ kann die Ausgabeschnittstelle dazu ausgebildet sein, den Transporteinheiten jeweils angepasste Steuerbefehle zu übermitteln. Die jeweils angepassten Steuerdaten, welche an eine jeweilige Transporteinheit übermittelt werden, können den Transporteinheiten die jeweils zugeordneten Transporte übermitteln. Mit anderen Worten kann die Ausgabeschnittstelle dazu ausgebildet sein, den Transporteinheiten jeweilige Steuerdaten zu übermitteln, um den jeweiligen Transporteinheiten durch die jeweiligen Steuerdaten die entsprechend des zweiten ausgewählten Planungsdatensatzes zugeordneten Transporte jeweils zu übermitteln.

Ein dritter Aspekt der vorliegenden Erfindung betrifft ein Montagesystem mit mehreren Montageorten und der erfindungsgemäßen Steuereinheit. Die Steuereinheit ist dazu ausgebildet, den Transport der Vielzahl an Werkstücken in dem modularen Montagesystem mittels des erfindungsgemäßen Verfahrens zu steuern. Zusätzlich kann das Montagesystem beziehungsweise können die jeweiligen Montageorte die im Rahmen des Verfahrens offenbarte Sensoreinheit beziehungsweise die offenbarten Sensoren aufweisen.

Die Steuereinheit kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Die Prozessoreinrichtung kann beispielsweise die Transportdatenbestimmungseinheit, die Produktionsdatenbestimmungseinheit und/oder die Planungsdatenbestimmungseinheit implementieren. Alternativ kann für die die Transportdatenbestimmungseinheit, die Produktionsdatenbestimmungseinheit und/oder die Planungsdatenbestimmungseinheit jeweils eine eigene Prozessoreinrichtung, beispielsweise mit den oben genannten Merkmalen, vorgesehen sein.

Zu der Erfindung gehören auch Weiterbildungen der erfindungsgemäßen Steuereinheit und des erfindungsgemäßen Montagesystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Steuereinheit und des erfindungsgemäßen Montagesystems hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombinationen der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: in einem äußerst schematischen Blockdiagramm ein modulares Montagesystem mit mehreren Montageorten mit mehreren fahrerlosen Transportfahrzeugen;
- Fig. 2: ein Ablaufdiagramm eines Verfahrens zum Steuern eines Transports einer Vielzahl an Werkstücken in dem modularen Montagesystem in einer beispielhaften Ausführungsform;
- Fig. 3: ein äußerst schematisches Blockdiagramm einer beispielhaften Steuereinheit zum Steuern eines Transports einer Vielzahl an Werkstücken in dem modularen Montagesystem;
- Fig. 4: in einem Blockdiagramm ein äußerst schematischen Überblick über einen Montageort;
- Fig. 5: eine beispielhafte Zuordnung zwischen Transporteinheiten und durchzuführenden Transporten;
- Fig. 6: ein Ablaufdiagramm des Transports entsprechend der Zuordnung gemäß Fig. 5; und
- Fig. 7: beispielhaft den Verlauf mehrerer Generationen an zweiten Planungsdatensätzen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

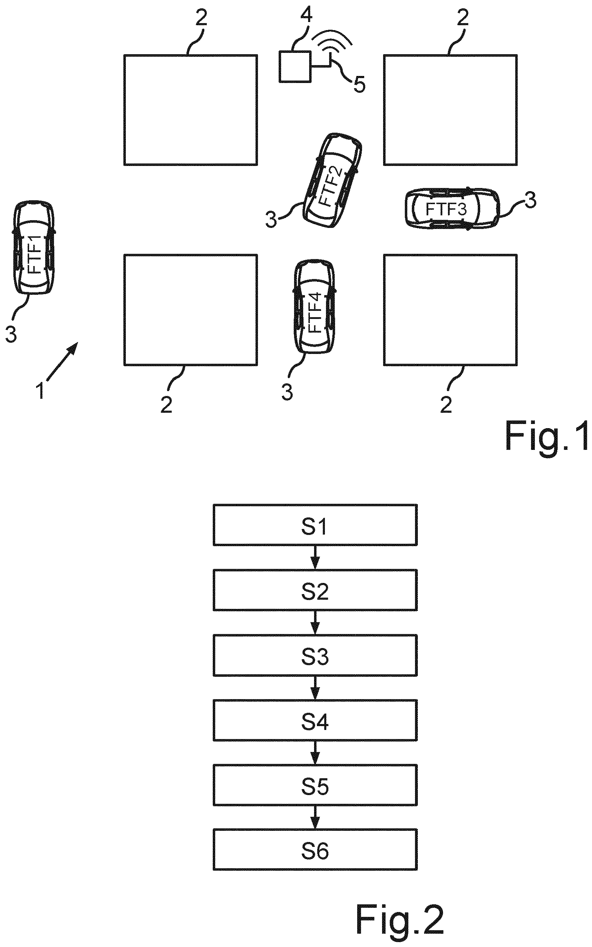

Fig. 1 zeigt ein modulares Montagesystem 1 mit mehreren Montageorten 2. Bei dem modularen Montagesystem 1 kann es sich um einen Bereich, etwa einer Fabrik, handeln. Insbesondere ist vorgesehen, dass die Montageorte 2 jeweils einen oder mehrere Produktionsschritte bei der Fertigung eines Produkts aus einem oder mehreren Werkstücken ermöglicht beziehungsweise zur Durchführung des einen oder der mehreren Produktionsschritte an den Werkstücken eingerichtet ist. Beispielsweise kann vorgesehen sein, dass die Werkstücke nacheinander unterschiedliche Montageorte 2 durchlaufen, wobei an den unterschiedlichen Montageorten 2 sequenziell unterschiedliche Produktionsschritte zur Fertigung des Produkts durchgeführt werden. Mit anderen Worten können in diesem Beispiel die Montageorte 2 dazu ausgebildet sein, das Produkt über mehrere Zwischenschritte beziehungsweise Zwischenprodukte zu fertigen beziehungsweise zu veredeln. Alternativ oder zusätzlich kann vorgesehen sein, dass mehrere der Montageorte 2 dazu eingerichtet sind, denselben oder dieselben Produktionsschritte durchzuführen. Dies kann beispielsweise sinnvoll sein, wenn einzelne Produktionsschritte besonders zeitaufwändig sind im Vergleich zu anderen Produktionsschritten. Vorzugsweise weist jeder Montageort 2 eine Maschine oder Einrichtung auf, welche zur Durchführung eines dem jeweiligen Montageort 2 zugeordneten Produktionsschritts ausgebildet ist.

Der Transport der Werkstücke zwischen den Montageorten 2 wird mittels einer Vielzahl an Transporteinheiten 3 durchgeführt, welche vorliegend als fahrerlose Transportfahrzeuge (im folgenden FTF genannt) ausgeführt sind. Die Transporteinheiten 3 können dazu ausgebildet sein, jeweils eines oder mehrere Werkstücke pro Fahrt zu transportieren. Der Transport der Werkstücke erfolgt beispielsweise auf Werkstückträgern, auf welchem eines oder mehrere Werkstücke für den Transport angeordnet werden. Im einfachsten Fall kann es sich bei einem solchen Werkstückträger beispielsweise um eine Palette handeln. Um die durchzuführenden Transporte möglichst effizient auf die Transporteinheiten 3 aufzuteilen, ist beispielsweise das Verfahren gemäß Fig. 2 vorgesehen:
In einem Schritt S1 erfolgt ein Bestimmen jeweiliger Produktionsdaten für die Werkstücke der Vielzahl, wobei die Produktionsdaten eine jeweilige Position und einen Ziel-Montageort für das jeweilige Werkstück aufweisen. In einem Schritt S2 erfolgt ein Bestimmen von Transportdaten basierend zumindest auf den Produktionsdaten, wobei durch die Transportdaten jedem Werkstück der Vielzahl ein jeweils durchzuführender Transport zugeordnet wird. In einem Schritt S3 erfolgt ein Bestimmen eines ersten Planungsdatensatzes basierend auf den Transportdaten, wobei durch Verteilen einer Vielzahl an Transporteinheiten auf die durchzuführenden Transporte nach einer vorbestimmten Vorschrift eine Zuordnung zwischen Transporteinheiten und durchzuführenden Transporten erzeugt wird. In einem Schritt S4 erfolgt ein Erzeugen einer Vielzahl zweiter Planungsdatensätze aus dem ersten Planungsdatensatz durch jeweils unterschiedliche Rekombination der Zuordnung zwischen den Transporteinheiten und den durchzuführenden Transporten. In einem Schritt S5 erfolgt ein Auswählen eines ausgewählten der zweiten Planungsdatensätze nach einem vorbestimmten Bewertungskriterium und in einem Schritt S6 erfolgt ein Steuern des Transports der Vielzahl an Werkstücken durch die Transporteinheiten entsprechend dem ausgewählten zweiten Planungsdatensatz. Die einzelnen Schritte werden im Folgenden noch genauer erläutert.

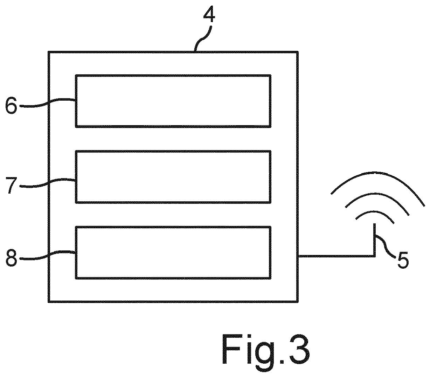

Fig. 3 zeigt eine beispielhafte Steuereinheit 4, welche dazu ausgebildet ist, das Verfahren gemäß Fig. 2 durchzuführen. Die Steuereinheit 4 weist eine Produktionsdatenbestimmungseinheit 6, eine Transportdatenbestimmungseinheit 7 und eine Planungsdatenbestimmungseinheit 8 auf. Die Produktionsdatenbestimmungseinheit 6 ist dazu ausgebildet, den Schritt S1 des Verfahrens durchzuführen. Die Transportdatenbestimmungseinheit 7 ist dazu ausgebildet, den Schritt S2 des Verfahrens durchzuführen. Die Planungsdatenbestimmungseinheit 8 ist dazu ausgebildet, die Schritte S3 bis S5 des Verfahrens durchzuführen.

Die Steuereinheit 4 kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des Verfahrens zum Steuern eines Transports einer Vielzahl an Werkstücken durchzuführen. Der Programmcode kann in einem Datenspeicher der Prozessoreinrichtung gespeichert sein. Die Prozessoreinrichtung kann beispielsweise die Transportdatenbestimmungseinheit 7, die Produktionsdatenbestimmungseinheit 6 und/oder die Planungsdatenbestimmungseinheit 8 implementieren. Alternativ kann für die Transportdatenbestimmungseinheit 7, die Produktionsdatenbestimmungseinheit 6 und/oder die Planungsdatenbestimmungseinheit 8 jeweils eine eigene Prozessoreinrichtung, beispielsweise mit den oben genannten Merkmalen, vorgesehen sein.

Durch die Planungsdatensätze beziehungsweise den ausgewählten Planungsdatensatz, welcher zum Steuern des Transports beziehungsweise der Transporteinheiten 3 herangezogen wird, kann ein Fahrplan beziehungsweise ein Ablaufplan vorgegeben werden. Dieser Fahrplan beziehungsweise Ablaufplan kann auch als Schedule bezeichnet werden. Somit kann das Aufstellen des Ablaufplans auch als Scheduling-Prozess bezeichnet werden. Der Scheduling-Prozess wird nachfolgend genauer erklärt:
Zunächst erfolgt eine zeitliche Dekomposition des Produktionstages. Die Produktionsdaten können erzeugt werden, indem der jeweilige Produktionsstatus der Montageorte 2 in einer Matrix zusammengeführt werden. Zusätzlich können vorhersehbare Produktionsevents berechnet und/oder unvorhersehbare Events Stück für Stück simuliert werden. Dabei kann den vorhersehbaren und unvorhersehbaren Events ein jeweiliger Zeitstempel zugewiesen werden. Beispielsweise enthalten die Transportdaten basierend auf den Produktionsdaten die vorhersehbaren Produktionsevents und/oder die unvorhersehbaren Events. Basierend auf den Transportdaten kann der erste Planungsdatensatz erzeugt werden, wobei dieser einen Start-Schedule für die nachfolgende Optimierung beinhaltet. Der Start-Schedule kann dabei anhand der Liste aus vorhersehbaren Produktionsevents und unvorhersehbaren Events basieren. Anschließend erfolgt das Optimieren, was über eine oder mehrere Generationen an zweiten Planungsdaten setzen erfolgen kann. Entsprechend dem vorbestimmten Kriterium kann der optimale zweite Planungsdatensatz bestimmt werden. Dieser enthält beziehungsweise entspricht dem optimalen Schedule und wurde durch Variation der Transportzuweisung gefunden (geschickte Wahl der Produktionsvarianten).

Zeitliche Dekomposition des Produktionstages: Anstatt einen Schedule für den ganzen Produktionstag zu berechnen, werden Schedules regelmäßig auf Basis des aktuellen Produktionsstatus berechnet, um für ein gewisses Zeitfenster ΔT, die Produktion gesamtheitlich zu optimieren. Dies reduziert die Komplexität durch Reduktion der Problemstellung auf einen definierten Zeitraum im Vergleich zur Schedule-Berechnung für einen ganzen Tag.

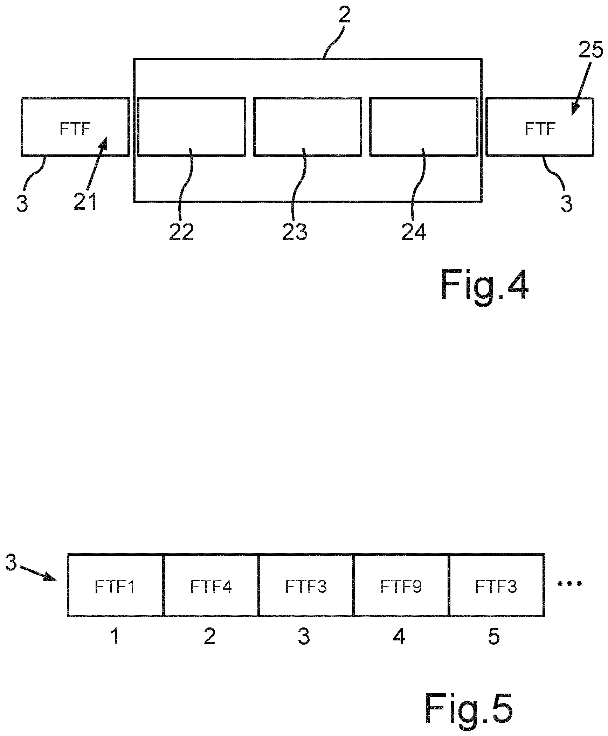

Kontext für Schedule Berechnung - der aktuelle Produktionsstatus: Zum Zeitpunkt jeder Schedule-Berechnung existiert ein bestimmter Produktionsstatus der Montageorte 2, welcher ein Abbild der Produktion darstellt. Er beinhaltet Informationen zu Werkstückträgern und ihren Positionen im Montagesystem 1. Ein Montageort 2 besteht im Beispiel abstrahiert aus fünf Teilen beziehungsweise fünf möglichen, unterscheidbaren Positionen, siehe Fig. 4: Auf einem fahrerlosen Transportfahrzeug im Zulauf 21 zu dem Montageort ("FTF-Dropdown-Position 21"), Einlauf-Band 22 für den Werkstückträger beziehungsweise Warenannahme des Montageortes 2, in Bearbeitung beziehungsweise Bearbeitungsposition 23 für den Werkstückträger, Auslaufband 24 beziehungsweise Ausgangslager des Montageortes 2 für den Werkstückträger und auf einem fahrerlosen Transportfahrzeug, das im Begriff ist, den Montageort mit dem Werkstück zu verlassen 25 ("FTF-Pickup-Position 25"). Über die FTF werden die Werkstückträger von Montageort 2 zu Montageort 2 gebracht, sie befinden sich somit entweder auf einem FTF oder einem Bereich eines Montageortes 2.

Repräsentation des Produktionsstatus: Der jeweilige Produktionsstatus der Montageorte 2 kann beispielsweise durch eine Matrix M (Werkstückträger x Position) in den Produktionsdaten dokumentiert und eindeutig beschrieben werden. Für die Werkstückträger können je nach Position im Montagesystem 1 Events berechnet werden, wann sich ihr aktueller Zustand voraussichtlich ändern wird. Im Folgenden werden beispielhaft die drei Events "Ende der Bearbeitung", "Dropdown", und "Pickup" beschrieben.

Basierend auf dem Produktionsstatus beziehungsweise den Produktionsdaten können vorhersehbare Produktionsevents berechnet werden: Für alle sich auf einer Bearbeitungsposition 23 befindlichen Werkstückträger ist das Ende der Bearbeitungszeit bekannt und kann aus Bearbeitungsstart und Bearbeitungszeit berechnet werden. Das Event des Bearbeitungsendes bekommt einen Zeitstempel ("Ende der Bearbeitung"). Für Werkstückträger, die sich auf Fahrzeugen auf dem Weg zum Dropdown 21 an einem Montageort 2 befinden, kann ebenfalls ein Dropdown-Event berechnet werden. Die Endzeit dieses Dropdowns berechnet sich aus dem Transportstart, der Transportstrecke und der Geschwindigkeit eines FTF ("Dropdown"). Dies gilt analog für FTF, die auf dem Weg zur Abholung eines Werkstückträgers sind ("Pickup"). Alle aus dem aktuellen Produktionsstatus beziehungsweise den Produktionsdaten vorhersehbaren Events im Produktionssystem bzw. Montagesystem 1 müssen jetzt in der Chronologie ihrer Zeitstempel aufsteigend sortiert werden. Sie werden in einer Eventliste gespeichert. Diese Eventliste bildet insbesondere die Transportdaten. Mit anderen Worten können die Transportdaten die genannten Events, optional mit einem jeweiligen Zeitstempel, beinhalten beziehungsweise angeben.

Unvorhersehbare Events können Stück für Stück simuliert werden wie folgt, optional kann diesen ein Zeitstempel zugewiesen werden: Nachdem die vorhersehbaren Events in die Liste chronologisch eingetragen wurden, wird beginnend mit dem ersten Element der Liste und weiterführend mit jedem weiteren Element die Aktion des jeweiligen Events (simulativ) ausgeführt. Damit werden Folgeevents generiert, d.h. es wird davon ausgegangen, dass die entsprechende Zeit der vorhersehbaren Events abgelaufen ist und von den abgelaufenen Events abhängige Folgeaktivitäten eintreten können (analog zu Diskret-Event-Simulationen). Das führt im ersten Schritt zu einer Veränderung der Matrix M und im Weiteren dazu, dass Events in der Liste ohne Zeitstempel (z.B. ein Werkstückträger, der im Einlauf einer Station liegt) einen Zeitstempel bekommen können, weil ein Dropdown z.B. zu Ende ausgeführt werden kann oder die Bearbeitung eines Werkstückträgers endet und dadurch ein auf dem Einlaufband liegender Werkstückträger, einen Platz nach vorne rücken kann. Diese Events müssen dann entsprechend ihrem Zeitstempel an die chronologisch richtige Position der Liste eingeordnet werden. Dadurch, dass die Liste chronologisch aufgebaut ist, können die neuen Events mit Zeitstempel nur hinter dem Event liegen, dem sie ihren Zeitstempel verdanken. Die Folgeaktivitäten können ja nicht in der Vergangenheit liegen. Unter Berücksichtigung der Abhängigkeiten zwischen Werkstückträgern innerhalb einer Station kann so iterativ Stück für Stück in die Zukunft geschaut, indem von Folgeevent zu Folgeevent simuliert wird, die Events mit Zeitstempeln hinterlegt werden und in die Eventliste eingetragen werden. Somit können die Transportdaten, welche die Eventliste beinhalten, optional auch die unvorhersehbaren Events beinhalten beziehungsweise angeben.

Der wesentliche Teil beim Blick in die Zukunft ist die Zuweisung der FTF für anstehende Transporte. Hierbei muss jeweils berücksichtigt werden, wie lange ein FTF für den Pickup (die Abholung) des Werkstückträgers braucht und wie lange der Transport zur nächsten Station dauert. Damit müssen die Standorte der Transporteinheiten 3 beziehungsweise FTF auch eventbasiert in einer Matrix getrackt werden, um für jeden zuzuweisenden Transportauftrag, den Überblick über die Vielzahl an Transporteinheiten 3 beziehungsweise die FTF-Flotte zu haben. Für einen ersten Start-Schedule, der später mittels eines genetischen Algorithmus geschickt optimiert wird, kann eine Heuristik wie "kürzeste Anfahrtszeit" verwendet werden, welches einem Transport das FTF zuweist, welches laut der getrackten FTF-Standorte den kürzesten Anfahrtsweg zum Pickup 25 hat. So lassen sich auch Stück für Stück die Transportevents in die Eventliste beziehungsweise in die Transportdaten aufnehmen. Insgesamt ergibt sich damit eine vollständige Eventliste als Teil der Transportdaten für den festgelegten Vorausschauparameter ΔT, aus der sich ein gesamter Schedule aufbauen lässt (siehe insbesondere nächster Absatz). Geht man die vollständige Eventliste von vorne bis hinten durch und schaut sich die gewählten FTF-Zuweisungen an, erhält man eine initiale heuristische Übersicht der zugewiesenen Transporte, welche in einem Individuum eines genetischen Algorithmus beschrieben werden kann (siehe insbesondere auch übernächster Absatz).

Als nächstes wird ein finaler Start-Schedule für die Optimierung aus der fertigen Eventliste beziehungsweise den Transportdaten aufgebaut: Aus der generierten Eventliste beziehungsweise den Transportdaten kann der alle Abhängigkeiten und die FTF-Zuweisung berücksichtigende Schedule beziehungsweise der erste Planungsdatensatz erzeugt beziehungsweise aufgebaut werden. Ergebnis ist ein beispielhafter erster Planungsdatensatz mit einem beispielhaften Schedule beziehungsweise einer beispielhaften Zuordnung zwischen durchzuführenden Transporten und FTF. Dies ist in Fig. 5 beispielhaft dargestellt. Beispielsweise ist ein beispielhafter Auszug aus einer solchen Zuordnung ein erster Transport einem FTF1, ein zweiter Transport einem FTF4, ein dritter Transporte einem FTF3, ein vierter Transport einem FTF9 und ein fünfter Transport einem FTF3 zugeordnet usw.

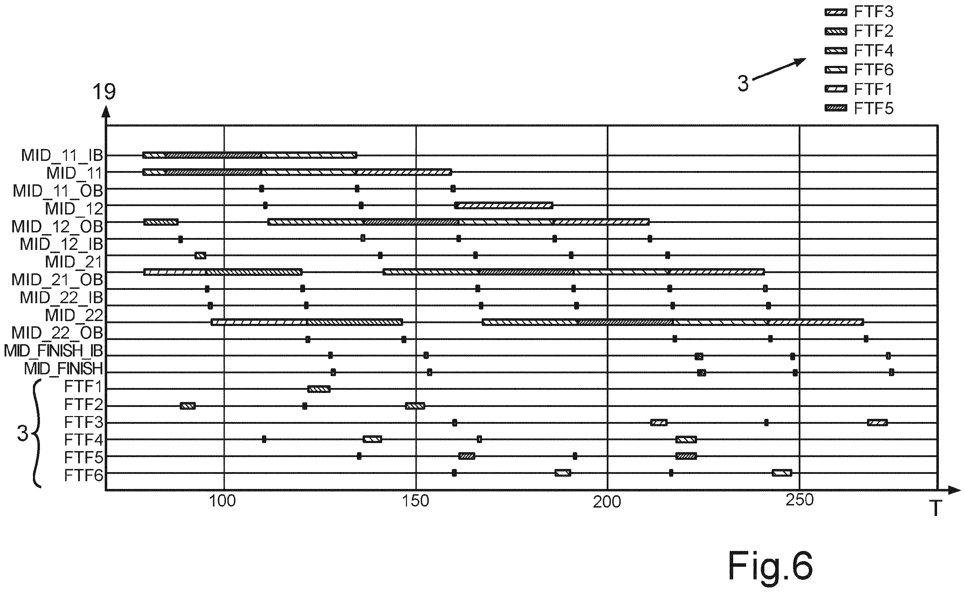

Der optimale Schedule kann durch Variation der Transportzuweisung, also der Zuordnung zwischen durchzuführenden Transporten und Transporteinheiten 3, bestimmt werden: Um verschiedene Varianten des Start-Schedules zu generieren, können nun mittels eines genetischen Algorithmus die zugewiesenen FTF geschickt iterativ variiert werden. Sind beispielsweise insgesamt 60 Transporte im oben generierten Start-Schedule notwendig, kann ausgehend von der oben getroffenen heuristischen Start-Zuweisung die FTF-Zuweisung variiert werden. Ein entsprechendes Individuum sähe aus wie in Fig. 6 dargestellt (mit 60 statt 5 Stellen für 60 Transporte). Fig. 6 zeigt die Nutzung einzelner Ressourcen 19 (FTF sowie Montageorte 2) entlang der Hochachse entlang eines zeitlichen Verlaufs T. Dabei sind die Transporteinheiten 3 beziehungsweise FTF entsprechend der Legende hervorgehoben.

Die Schritte beim Erzeugen des optimalen Schedule beziehungsweise beim Erzeugen der ausgewählten zweiten Planungsdatensätze können wie folgt ausgestaltet sein:
1. Aus Start-Schedule generieren einer Population: der Start-Schedule wird beispielsweise 100 mal kopiert und an manchen Stellen zufällig mutiert, z.B. an Stelle 4 wird statt FTF9, FTF13 zugewiesen. So erhält man 100 unterschiedliche Individuen und damit Schedules. Dies stellt insbesondere die zweiten Planungsdatensätze einer ersten Generation dar.
2. Die 100 variierten erstmals Start-Schedules beziehungsweise die 100 zweiten Planungsdatensätze erster Generation werden bewertet (hierzu muss jeweils für die gewählte Zuweisung der Gesamtschedule aufgebaut werden (Decodierung durch oben beschriebenen ereignisbasierten Scheduleaufbau).
3. Dann erfolgt eine Selektion der besten Lösungen, beispielsweise der drei besten Lösungen oder der 30 bis 50 besten Lösungen.
4. Die selektierten Schedules werden erneut rekombiniert und mutiert, um den Suchraum zu untersuchen und noch bessere Lösungen zu finden. Als Ergebnis werden zweite Planungsdatensätze zweiter beziehungsweise n-ter Generation erhalten.
5. Wiederum erfolgt eine Bewertung analog zu Schritt 2.
6. Schritte 3 bis 5 werden über mehrere Generationen wiederholt.
7. Zum Schluss wird die beste Lösung als geschickteste und schnellste (Gesamtzeit der Abarbeitung aller Montagevorgänge inkl. Transporte) verwendet, um das Montagesystem 1 bzw. Produktionssystem zu steuern. Mit anderen Worten wird der optimale zweite Planungsdatensatz ausgewählt und für die Steuerung der Transporte angewandt.

Mit anderen Worten: Die in jeder Generation des genetischen Algorithmus neu-generierten Schedules, mit unterschiedlich zugewiesenen FTF können anhand einer Kostenfunktion, die beispielsweise die Gesamtzeit der Abarbeitung der Montagevorgänge minimiert, verglichen werden, nachdem sie wie oben beschrieben über das eventbasierte Scheduling decodiert wurden. Die Lösung nähert sich iterativ Schritt für Schritt dem Gesamtoptimum. Hierzu wird ein Suchraum (im vorliegenden Beispiel etwa 20⁶⁰ Varianten) durch verschiedene geschickte FTF-Zuweisungen breit untersucht. Durch die Präferenz der FTF-Zuweisungen besser bewerteter Schedules bewegt sich die Optimierung in Richtung der optimalen Lösung. Jeder variierte Schedule repräsentiert eine eigene Eventliste, welche von der jeweiligen FTF-Zuweisung abhängt, die im Genetischen Algorithmus variiert wird. Am Ende der Optimierung wird die Eventliste als Plan für die Steuerung gewählt, die die Kostenfunktion optimiert, beispielsweise minimiert.

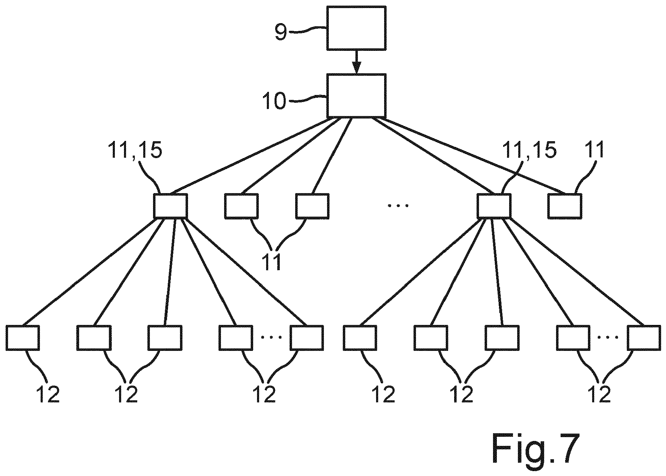

Fig. 7 bietet abschließend einen Überblick über zwei Generationen an zweiten Planungsdatensätzen 11, 12. Zunächst wird aus den Transportdaten 9 beziehungsweise der darin enthaltenen Eventliste der erste Planungsdatensatz 10 erzeugt, siehe auch Schritt S3. Der erste Planungsdatensatz 10 enthält die erste, temporäre Zuordnung zwischen Transporteinheiten 3 und durchzuführenden Transporten. Basierend auf dem ersten Planungsdatensatz 10 wird dann die Vielzahl zweiter Planungsdatensätze 11 erster Generation erzeugt. Dies erfolgt durch Variieren beziehungsweise Rekombinieren der Zuordnung zwischen Transporteinheiten 3 und durchzuführenden Transporten. Aus diesen zweiten Planungsdatensätzen 11 erster Generation wird eine Teilmenge, beispielsweise zwei, drei oder vier, ausgewählt. Die ausgewählten Planungsdatensätzen 15 erster Generation dienen anschließend als Basis für zweite Planungsdatensätze 12 zweiter Generation. Dabei wird wiederum jeweils die Zuordnung zwischen Transporteinheiten 3 und durchzuführenden Transporten variiert beziehungsweise rekombiniert. Aus den zweiten Planungsdatensätzen 11, 12 erster und zweiter Generation kann dann der optimale, insbesondere genau einer, ausgewählt werden und für das Steuern der Transporte herangezogen werden. Selbstverständlich ist auch eine Optimierung über mehr als zwei Generationen möglich. In diesem Fall kann eine dritte oder eine n-te Generation aus der zweiten Generation beziehungsweise der (n-1)-ten Generation auf analoge Weise wie die zweite Generation aus der ersten Generation erzeugt werden.

Vorteile der vorliegenden Art der Planung liegen einer gesamtheitlichen Optimierung des Montagesystem 1 bzw. Produktionssystems. Dabei wird die Komplexität handhabbar gemacht und die Problemstellung dekomponiert. Fahrzeugzuweisungen werden so gut wie möglich optimiert. Zudem bleibt eine Echtzeitfähigkeit der Steuerung sichergestellt. Durch Pull-Steuerung können Ressourcen-Deadlocks im System entstehen. Der Schedule lässt diese durch die gesamtheitliche Sicht auf das Problem nicht entstehen und vermeidet sie.

Insgesamt zeigen die Beispiele, wie ein eventbasierter Aufbau von gesamtheitlich optimierenden Schedules in einem modularen Montagesystem bereitgestellt werden kann.

## Patentansprüche

1. Verfahren zum Steuern von Transporten einer Vielzahl an Werkstücken in einem modularen Montagesystem (1) mit mehreren Montageorten (2), mit den Schritten:
- Bestimmen (S1) jeweiliger Produktionsdaten für die Werkstücke der Vielzahl, wobei die Produktionsdaten eine Angabe einer Position und eines Ziel-Montageortes für das jeweilige Werkstück beinhalten,
- Bestimmen (S2) von Transportdaten (9) basierend zumindest auf den Produktionsdaten, wobei durch die Transportdaten jedem Werkstück der Vielzahl ein jeweils durchzuführender Transport zugeordnet wird,
- Bestimmen (S3) eines ersten Planungsdatensatzes (10) basierend auf den Transportdaten (9), wobei durch Verteilen einer Vielzahl an Transporteinheiten (3) auf die durchzuführenden Transporte nach einer vorbestimmten Vorschrift eine Zuordnung zwischen Transporteinheiten (3) und durchzuführenden Transporten erzeugt wird,
- Erzeugen (S4) einer Vielzahl zweiter Planungsdatensätze (11, 12) aus dem ersten Planungsdatensatz (10) durch jeweils unterschiedliche Rekombination der Zuordnung zwischen den Transporteinheiten (3) und den durchzuführenden Transporten,
- Auswählen (S5) eines ausgewählten der zweiten Planungsdatensätze (11, 12) nach einem vorbestimmten Bewertungskriterium, und
- Steuern (S6) des Transports der Vielzahl an Werkstücken durch die Transporteinheiten (3) entsprechend dem ausgewählten zweiten Planungsdatensatz (11 ,12).

2. Verfahren nach Anspruch 1,
**dadurch gekennzeichnet, dass**
als Teil der Produktionsdaten zusätzlich eine Restverarbeitungszeit für das jeweilige Werkstück bestimmt wird und der jeweils durchzuführenden Transport zusätzlich in Abhängigkeit von der Restverarbeitungszeit bestimmt wird.

3. Verfahren nach einem der vorhergehenden Ansprüche,
**dadurch gekennzeichnet, dass**
das Erzeugen der Vielzahl zweiter Planungsdatensätze (11, 12) in mehreren Iterationsschritten erfolgt, wobei innerhalb jedes der mehreren Iterationsschritte jeweils unterschiedliche Rekombinationen der Zuordnung zwischen den Transporteinheiten und den durchzuführenden Transporten erfolgen.

4. Verfahren nach einem der vorhergehenden Ansprüche,
**dadurch gekennzeichnet, dass**
in einem ersten Iterationsschritt eine Vielzahl zweiter Planungsdatensätze erster Generation (11) aus dem ersten Planungsdatensatz (10) erzeugt werden und in einem zweiten Iterationsschritt eine Vielzahl zweiter Planungsdatensätze zweiter Generation (12) aus den zweiten Planungsdatensätzen erster Generation (11) erzeugt werden.

5. Verfahren nach Anspruch 4,
**dadurch gekennzeichnet, dass**
nach einem vorbestimmten Bewertungskriterium eine vorbestimmte Anzahl an zweiten Planungsdatensätzen erster Generation (15) aus der Vielzahl zweiter Planungsdatensätze erster Generation (11) ausgewählt werden, wobei nur die ausgewählten zweiten Planungsdatensätzen (15) erster Generation als Basis für die zweiten Planungsdatensätze zweiter Generation (12) herangezogen werden.

6. Verfahren nach einem der vorhergehenden Ansprüche,
**dadurch gekennzeichnet, dass**
die Transportdaten (9) nur durchzuführende Transporte betreffen, die innerhalb eines vorausliegenden Zeitfensters mit vorbestimmten zeitlichen Dauer, beispielsweise höchstens 60 Minuten, höchstens 30 Minuten oder höchstens 10 Minuten, liegen.

7. Verfahren nach Anspruch 6,
**dadurch gekennzeichnet, dass**
wiederholt, insbesondere regelmäßig oder periodisch, für jeweils aufeinander folgende vorausliegende Zeitfenster (ΔT) ein jeweiliger ausgewählter zweiter Planungsdatensatz (11, 12) bestimmt wird.

8. Verfahren nach Anspruch 7,
**dadurch gekennzeichnet, dass**
eine Periodendauer, mit welcher das wiederholte Bestimmen von Planungsdatensätzen (11, 12) erfolgt, höchstens die Hälfte oder höchstens ein Viertel oder höchstens ein Zehntel der vorbestimmten zeitlichen Dauer des jeweiligen vorausliegenden Zeitfensters beträgt.

9. Steuereinheit (10) zum Steuern von Transporten einer Vielzahl an Werkstücken in einem modularen Montagesystem (1) mit mehreren Montageorten (2), mit:
- einer Produktionsdatenbestimmungseinheit (6), ausgebildet zum Bestimmen jeweiliger Produktionsdaten für die Werkstücke der Vielzahl, wobei die Produktionsdaten eine Angabe einer Position und eines Ziel-Montageortes für das jeweilige Werkstück beinhalten,
- einer Transportdatenbestimmungseinheit (7), ausgebildet zum Bestimmen von Transportdaten (9) basierend zumindest auf den Produktionsdaten, wobei durch die Transportdaten (9) jedem Werkstück der Vielzahl ein jeweils durchzuführender Transport zugeordnet ist, und
- einer Planungsdatenbestimmungseinheit (8) zum Bestimmen eines ersten Planungsdatensatzes (10) basierend auf den Transportdaten (9), wobei die Planungsdatenbestimmungseinheit (8) dazu ausgebildet ist, durch Verteilen einer Vielzahl an Transporteinheiten (3) auf die durchzuführenden Transporte nach einer vorbestimmten Vorschrift eine Zuordnung zwischen Transporteinheiten (3) und durchzuführenden Transporten zu erzeugen, wobei
- die Planungsdatenbestimmungseinheit (8) dazu ausgebildet ist, eine Vielzahl zweiter Planungsdatensätze (11, 12) aus dem ersten Planungsdatensatz (10) durch jeweils unterschiedliche Rekombination der Zuordnung zwischen den Transporteinheiten (3) und den durchzuführenden Transporten zu erzeugen, und wobei
- die Planungsdatenbestimmungseinheit (8) dazu ausgebildet ist, einen ausgewählten der zweiten Planungsdatensätze (11, 12) nach einem vorbestimmten Bewertungskriterium, auszuwählen, wobei
- die Steuereinheit (4) dazu ausgebildet ist, den Transport der Vielzahl an Werkstücken durch die Transporteinheiten entsprechend dem ausgewählten zweiten Planungsdatensatz zu steuern.

10. Montagesystem (1), mit
- mehreren Montageorten (2), und
- einer Steuereinheit, wobei
die Steuereinheit (4) dazu ausgebildet ist, einen Transport einer Vielzahl an Werkstücken in dem modularen Montagesystem (1) durch das Verfahren gemäß einem der Ansprüche 1 bis 8 zu steuern.

## Claims

1. Method for controlling transports of a plurality of workpieces in a modular assembly system (1) with multiple assembly locations (2), with the steps:
- determining (S1) respective production data for the workpieces of the plurality of workpieces, wherein the production data includes an indication of a position and a target assembly location for the respective workpiece,
- determining (S2) transport data (9) based at least on the production data, wherein the transport data is used to assign a respective transport to be carried out to each workpiece of the plurality of workpieces,
- determining (S3) a first planning data set (10) based on the transport data (9), wherein an assignment between transport units (3) and transports to be carried out is generated by distributing a plurality of transport units (3) to the transports to be carried out according to a prespecified policy,
- generating (S4) a plurality of second planning data sets (11, 12) from the first planning data set (10) by respectively different recombination of the assignment between the transport units (3) and the transports to be carried out,
- selecting (S5) a selected of the second planning data sets (11, 12) according to a prespecified evaluation criterion, and
- controlling (S6) the transport of the plurality of workpieces by the transport units (3) according to the selected second planning data set (11, 12).

2. Method according to claim 1,
**characterized in that**
a residual processing time for the respective workpiece is additionally determined as part of the production data and the respective transport to be carried out is additionally determined as a function of the residual processing time.

3. Method according to any one of the preceding claims,
**characterized in that**
the generation of the plurality of second planning data sets (11, 12) takes place in multiple iteration steps, wherein respectively different recombinations of the assignment between the transport units and the transports to be carried out take place within each of the multiple iteration steps.

4. Method according to any one of the preceding claims,
**characterized in that**
in a first iteration step, a plurality of second planning data sets of the first generation (11) are generated from the first planning data set (10), and in a second iteration step, a plurality of second planning data sets of the second generation (12) are generated from the second planning data sets of the first generation (11).

5. Method according to claim 4,
**characterized in that**
a predetermined number of second planning data sets (15) of the first generation are selected from the plurality of second planning data sets (11) of the first generation according to a prespecified evaluation criterion, wherein only the selected second planning data sets (15) of the first generation are taken as a basis for the second planning data sets (12) of the second generation.

6. Method according to any one of the preceding claims,
**characterized in that**
the transport data (9) relates only to transports to be carried out which are within a preceding time window of predetermined temporal duration, for example at most 60 minutes, at most 30 minutes or at most 10 minutes.

7. Method according to claim 6,
**characterized in that**
a respective selected second planning data set (11, 12) is determined repeatedly, in particular regularly or periodically, for respective successive preceding time windows (AT).

8. Method according to claim 7,
**characterized in that**
a period duration, in which the repeated determination of planning data sets (11, 12) takes place, is at most the half or at most a quarter or at most a tenth of the predetermined temporal duration of the respective preceding time window.

9. Control unit (10) for controlling transports of a plurality of workpieces in a modular assembly system (1) with multiple assembly locations (2), with:
- a production data determination unit (6), configured to determine respective production data for the workpieces of the plurality of workpieces, wherein the production data includes an indication of a position and a target assembly location for the respective workpiece,
- a transport data determination unit (7), configured to determine transport data (9) based at least on the production data, wherein the transport data (9) is used to assign a respective transport to be carried out to each workpiece of the plurality of workpieces, and
- a planning data determination unit (8) for determining a first planning data set (10) based on the transport data (9), wherein the planning data determination unit (8) is configured to generate an assignment between transport units (3) and transports to be carried out by distributing a plurality of transport units (3) to the transports to be carried out according to a prespecified policy, wherein
- the planning data determination unit (8) is configured to generate a plurality of second planning data sets (11, 12) from the first planning data set (10) by respectively different recombination of the assignment between the transport units (3) and the transports to be carried out, and wherein
- the planning data determination unit (8) is configured to select a selected of the second planning data sets (11, 12) according to a predetermined evaluation criterion, wherein
- the control unit (4) is configured to control the transport of the plurality of workpieces by the transport units according to the selected second planning data set.

10. Assembly system (1), with
- multiple assembly locations (2), and
- a control unit, wherein
the control unit (4) is configured to control a transport of a plurality of workpieces in the modular assembly system (1) by the method according to any one of claims 1 to 8.

## Revendications

1. Procédé de commande de transports d'une pluralité de pièces à usiner dans un système de montage (1) modulaire avec plusieurs lieux de montage (2), avec les étapes consistant à :
- déterminer (S1) des données de production respectives pour les pièces à usiner de la pluralité, dans lequel les données de production contiennent une indication d'une position et d'un lieu de montage cible pour la pièce à usiner respective,
- déterminer (S2) des données de transport (9) sur la base au moins des données de production, dans lequel un transport à réaliser respectivement est associé par les données de transport à chaque pièce à usiner de la pluralité,
- déterminer (S3) un premier jeu de données de planification (10) sur la base des données de transport (9), dans lequel une association entre des unités de transport (3) et des transports à réaliser est générée par distribution d'une pluralité d'unités de transport (3) sur les transports à réaliser selon une prescription prédéterminée,
- générer (S4) une pluralité de seconds jeux de données de planification (11, 12) du premier jeu de données de planification (10) par recombinaison différente respectivement de l'association entre les unités de transport (3) et les transports à réaliser,
- sélectionner (S5) un sélectionné des seconds jeux de données de planification (11, 12) selon un critère d'évaluation prédéterminé, et
- commander (S6) le transport de la pluralité de pièces à usiner par les unités de transport (3) selon le second jeu de données de planification (11, 12) sélectionné.

2. Procédé selon la revendication 1,
**caractérisé en ce que**
un temps de traitement restant pour la pièce à usiner respective est en outre déterminé comme partie des données de production et le transport à réaliser respectivement est en outre déterminé en fonction du temps de traitement restant.

3. Procédé selon l'une quelconque des revendications précédentes,
**caractérisé en ce que**
la génération de la pluralité de seconds jeux de données de planification (11, 12) est effectuée en plusieurs étapes d'itération, dans lequel respectivement différentes recombinaisons de l'association entre les unités de transport et les transports à réaliser sont effectuées dans chacune des plusieurs étapes d'itération.

4. Procédé selon l'une quelconque des revendications précédentes,
**caractérisé en ce que**
dans une première étape d'itération, une pluralité de seconds jeux de données de planification de première génération (11) est générée à partir du premier jeu de données de planification (10) et dans une seconde étape d'itération, une pluralité de seconds jeux de données de planification de seconde génération (12) est générée à partir des seconds jeux de données de planification de première génération (11).

5. Procédé selon la revendication 4,
**caractérisé en ce que**
un nombre prédéterminé de seconds jeux de données de planification de première génération (15) est sélectionné à partir de la pluralité de seconds jeux de données de planification de première génération (11) selon un critère d'évaluation prédéterminé, dans lequel seuls les seconds jeux de données de planification (15) sélectionnés de première génération sont utilisés comme base pour les seconds jeux de données de planification de seconde génération (12).

6. Procédé selon l'une quelconque des revendications précédentes,
**caractérisé en ce que**
les données de transport (9) concernent seulement des transports à réaliser qui se trouvent dans une fenêtre de temps à venir avec une durée temporelle prédéterminée, par exemple au plus 60 minutes, au plus 30 minutes ou au plus 10 minutes.

7. Procédé selon la revendication 6,
**caractérisé en ce que**
un second jeu de données de planification (11, 12) sélectionné respectif est déterminé de manière répétée, en particulier régulière ou périodique, pour des fenêtres de temps (AT) à venir respectivement successives.

8. Procédé selon la revendication 7,
**caractérisé en ce que**
une durée de période, avec laquelle la détermination répétée de jeux de données de planification (11, 12) est effectuée, s'élève au plus à la moitié ou au plus à un quart ou au plus à un dixième de la durée temporelle prédéterminée de la fenêtre de temps à venir respective.

9. Dispositif de commande (10) pour la commande de transports d'une pluralité de pièces à usiner dans un système de montage (1) modulaire avec plusieurs lieux de montage (2), avec :
- une unité de détermination de données de production (6) réalisée pour la détermination de données de production respectives pour les pièces à usiner de la pluralité, dans lequel les données de production contiennent une indication d'une position et d'un lieu de montage cible pour la pièce à usiner respective,
- une unité de détermination de données de transport (7) réalisée pour la détermination de données de transport (9) sur la base au moins des données de production, dans lequel un transport à réaliser respectivement est associé par les données de transport (9) à chaque pièce à usiner de la pluralité, et
- une unité de détermination de données de planification (8) pour la détermination d'un premier jeu de données de planification (10) sur la base des données de transport (9), dans lequel l'unité de détermination de données de planification (8) est réalisée afin de générer une association entre des unités de transport (3) et des transports à réaliser par distribution d'une pluralité d'unités de transport (3) sur les transports à réaliser selon une prescription prédéterminée, dans lequel
- l'unité de détermination de données de planification (8) est réalisée afin de générer une pluralité de seconds jeux de données de planification (11, 12) à partir du premier jeu de données de planification (10) par recombinaison différente respectivement de l'association entre les unités de transport (3) et les transports à réaliser, et dans lequel
- l'unité de détermination de données de planification (8) est réalisée afin de sélectionner un sélectionné des seconds jeux de données de planification (11, 12) selon un critère d'évaluation prédéterminé, dans lequel
- le dispositif de commande (4) est réalisé afin de commander le transport de la pluralité de pièces à usiner par les unités de transport selon le second jeu de données de planification sélectionné.

10. Système de montage (1) avec
- plusieurs lieux de montage (2), et
- un dispositif de commande, dans lequel
le dispositif de commande (4) est réalisé afin de commander un transport d'une pluralité de pièces à usiner dans le système de montage (1) modulaire par le procédé selon l'une quelconque des revendications 1 à 8.
